# EUROPÄISCHE PATENTSCHRIFT

(11) **EP 2 281 762 B1**
(45) Veröffentlichungstag und Bekanntmachung des Hinweises auf die Patenterteilung: **09.05.2012**
(21) Anmeldenummer: 10171782.5
(22) Anmeldetag: 03.08.2010
(51) Int. Cl.: B65G 65/23, B60P 1/64, B65D 88/56

(54) **Verfahren zum Entladen einer Vielzahl von Stückgütern sowie Entladevorrichtung**
Method for unloading a plurality of articles and unloading device
Procédé de déchargement d'une pluralité de produits et dispositif de déchargement

(30) Priorität: 07.08.2009 DE 102009036521
(43) Veröffentlichungstag der Anmeldung: 09.02.2011
(73) Patentinhaber: Red Parcel Post AG, 47051 Duisburg (DE)
(72) Erfinder: Hellmich, Walter, 46539, Dinslaken (DE)
(74) Vertreter: Gröschel, Andreas

(56) Entgegenhaltungen:
- DE-A1-102007 024 670
- US-A- 3 754 671
- US-A- 4 802 810

## Beschreibung

Die Erfindung betrifft ein Verfahren zum Entladen einer Vielzahl von Stückgütern sowie eine hierzu geeignete Entladevorrichtung, mit deren Hilfe insbesondere Pakete aus einem Transportcontainer entladen werden können.

Aus US 3,717,270 ist eine Entladevorrichtung zum Entladen eines Flugzeugcontainers bekannt. Der Flugzeugcontainer weist mehrere parallele Fächer auf, in denen jeweils ein Transportbehälter angeordnet ist. Der Flugzeugcontainer ist seitlich geöffnet, so dass die Transportbehälter zugänglich sind. Der untere Bereich des geöffneten Flugzeugcontainers wird mit einer Wand verschlossen, die im oberen Bereich mit einer Rutsche verbunden ist. Zum Entladen des obersten Transportbehälters wird der Flugzeugcontainer gemeinsam mit der Wand gekippt, so dass der obere Transportbehälter über die Rutsche herausrutscht, auf ein Transportband gelangt und mit Hilfe des Transportbands zu einer Stelle transportiert wird, wo der Transportbehälter von Hand entladen werden kann. Anschließend wird die Wand und die mit der Wand verbundene Rutsche nach unten bewegt, bis sie auf das Niveau der nächsten Ebene des Flugzeugcontainers gelangt und der nächste Transportbehälter über die Rutsche entladen werden kann.

Nachteilig bei einer derartigen Entladevorrichtung und einem derartigen Entladeverfahren ist, dass nur eine geringe Anzahl größerer Einzelstücke, wie größere Transportbehälter, entladen werden können. Für ein Entladen einer Vielzahl von Stückgütern, wie insbesondere Paketen, wie sie bei der Postbeförderung verwendet werden ("Post-Pakete"), ist ein derartiges Verfahren nicht geeignet, da die Pakete beim Entladen aneinander schlagen würden und Beschädigungen auftreten würden.

Aus der DE 10 2007 024 670 A1 ist eine Vorrichtung zur Entladung von Postpaketen aus einem Behälter mit wenigstens einer Ladeöffnung bekannt. Die Vorrichtung umfasst eine Aufnahmeeinrichtung zur Aufnahme des Behälters und eine Kippeinrichtung zum Kippen eines aufgenommenen Behälters um eine horizontale Achse. Die Vorrichtung weist ferner eine Auffangvorrichtung auf, die Mittel zur räumlichen Ausweitung der Auffangvorrichtung in die Ladeöffnung hinein aufweist. Die Auffangvorrichtung ist ferner über eine Führung in eine Position unterhalb des Behälterbodens eines in der Vorrichtung aufgenommenen Behälters verfahrbar, in der die Auffangvorrichtung die Ladeöffnung nicht verdeckt. Mit der Auffangvorrichtung können Gegenstände beim Kippvorgang abgefangen werden.

Aus der US 3,754,671 A ist ein Apparat zum Entladen von Artikeln aus Rollcontainern bekannt, wobei jeder Container mit ähnlichen Artikeln geladen ist. Die Artikel bestehen aus Plastikboxen mit vorgegebenen Abmessungen und sind in Schichten in dem Container angeordnet und können durch ein Kippen des Containers schichtweise auf eine Bandförderanordnung entladen werden. Dazu weist der Apparat eine kippbare Entladeplattform mit zwei Führungsschienen und einem Barriereelement auf, wobei das Barriereelement in den Führungschienen beweglich ist, um eine Entladeöffnung des Containers sukzessive freizugeben. An dem Barriereelement kann die Bandförderanordnung mit einem Ende abgestützt werden.

Es ist die Aufgabe der Erfindung, ein Verfahren und eine Entladevorrichtung zu schaffen, mit deren Hilfe eine Vielzahl von Stückgütern, insbesondere Pakete, sicher aus einem Transportcontainer entladen werden können.

Die Lösung der Aufgabe erfolgt erfindungsgemäß durch ein Verfahren mit den Merkmalen des Anspruchs 1 sowie eine Entladevorrichtung mit den Merkmalen des Anspruchs 8. Bevorzugte Ausgestaltungen der Erfindung sind in den Unteransprüchen angegeben.

Bei dem erfindungsgemäßen Verfahren zum Entladen einer Vielzahl von Stückgütern, insbesondere Paketen aus einem Transportcontainer, der eine verschließbare Füllöffnung aufweist, wird die Füllöffnung des Transportcontainers teilweise zur Ausbildung einer Entladeöffnung geöffnet, wobei die Entladeöffnung an einer Oberkante der Füllöffnung beginnt. Ein Abzugsband wird an einem unteren Rand der Entladeöffnung positioniert und mit dem Transportcontainer verbunden, wobei das Abzugsband zwischen der Oberkante der Füllöffnung und einer Unterkante der Füllöffnung zumindest in einem Teilbereich beweglich ist. Der Transportcontainer wird derart gekippt, dass mindestens ein Stückgut über die Entladeöffnung auf das Abzugsband ausgekippt wird. Der untere Rand der Entladeöffnung wird durch eine Relativbewegung des Transportcontainers zu dem Abzugsband auf eine Unterkante der Füllöffnung zu bewegt.

Durch das Abzugsband kann gewährleistet werden, dass die zu entladenen Stückgüter mit der Transportgeschwindigkeit des Abzugsbands entladen werden. Ein Rutschen und Purzeln über eine größere Höhe wird dadurch vermieden. Die Gefahr, dass benachbarte Stückgüter mit einer hohen Geschwindigkeit aufeinanderprallen und beschädigt werden können, kann dadurch erheblich reduziert oder sogar vermieden werden. Die effektive Fallhöhe der Stückgüter beim Entladen kann dadurch reduziert werden. Auch innerhalb des Transportcontainers wird die Fallhöhe der Einzelstückgüter begrenzt. Das Abzugsband kann an der Füllöffnung entlang von geodätisch oben nach geodätisch unten bewegt werden, bis eines der Stückgüter aus dem Inneren des Transportcontainers über die Entladeöffnung auf das Abzugsband gelangt. Dies ermöglicht es, dass innerhalb des Transportcontainers Stückgüter nachrutschen können, wobei diese Stückgüter von dem in Richtung auf die Entladeöffnung zu vor ihnen befindlichen Stückgütern gebremst werden. Eine Beschädigung der Stückgüter innerhalb des Transportcontainers wird dadurch vermieden. Die Entladeöffnung kann sich durch die Bewegung des Abzugsbands nach unten immer weiter vergrößern, so dass auch größere Stückgüter über die Entladeöffnung entladen werden können. Es ist aber auch möglich, dass ein oberer Rand der Entladeöffnung, beginnend bei der Oberkante der Füllöffnung ebenfalls nach unten wandert. Der Bereich der Füllöffnung unterhalb des Abzugsbands bleibt verschlossen, so dass keine Stückgüter unterhalb des Abzugsbandes aus dem Innern des Transportcontainers herausgelangen können. Eine plötzliche und schlagartige Entladung des Transportcontainers wird dadurch vermieden. Dadurch, dass die Vielzahl geladener Stückgüter über das Abzugsband ohne Beschädigung sicher entladen werden können, ist es möglich, einen Transportcontainer, wie er beispielsweise zum Transport mit Hilfe eines LKWs verwendet wird, durch Kippen eine Vielzahl von Stückgütern schnell und einfach zu entladen. Insbesondere ist es nicht erforderlich, die Stückgüter von Hand zu entladen. Die Entladung eines Transportcontainers, der mit einer Vielzahl von Paketen gefüllt ist, kann dadurch erheblich beschleunigt und kostengünstiger erfolgen. Insbesondere ist es möglich, den Entladeprozess zu automatisieren, so dass zu nahezu beliebigen Uhrzeiten ein Transportcontainer entladen und die transportierten Stückgüter sortiert werden können. Dies ermöglicht es auch zu einem deutlich späteren Zeitpunkt Transportaufträge für Pakete anzunehmen und eine Zustellung am nächsten Tag garantieren zu können. Der Handel kann dadurch Ware später kommissionieren und Ersatzbedarf besser kalkulieren. Eine unnötige oder überdimensionierte Lagerhaltung von Ware kann dadurch vermieden werden. Die Füllöffnung kann bei dem Transponcontainer insbesondere seitlich und/oder frontal angeordnet sein. Bei einem im Wesentlichen quaderförmigen Transportcontainer kann die Füllöffnung an mindestens einer Längsseite und/oder Frontseite vorgesehen werden, wobei insbesondere die gesamte Längseite und/oder Frontseite zur Ausbildung der Füllöffnung weggeklappt oder weggeschoben werden kann. Das Abzugsband kann sich beispielsweise an einem Rahmen des Transportcontainers, insbesondere von außen festklemmen und beispielsweise über Rollen an dem Transportcontainer entlang von oben, das heißt, von der Oberkante der Füllöffnung aus, nach unten, das heißt, bis zur Unterkante der Füllöffnung, an der Füllöffnung bewegt werden. Durch die Verbindung des Abzugsbandes mit dem Transportcontainer wird verrnieden, dass durch einen Stoß eines Stückguts an das Abzugsband ein Spalt zwischen dem Abzugsband und dem Transportcontainer entstehen kann, durch den Stückgüter an dem Abzugsband vorbei herausfallen können. Gleichzeitig wird durch die Beweglichkeit zwischen der Oberkante und der Unterkante gewährleistet, dass das Abzugsband die Relativbewegung des Transportcontainers zu dem Abzugsband ausführen kann. Die Verbindung des Abzugbandes mit dem Transportcontainer kann insbesondere durch einen auf den Rahmen des Transportcontainers ausgeübten vorzugsweise einstellbaren Druck hergestellt werden.

Die für die Ausbildung der Entladeöffnung vorgesehenen beweglichen Bauteile sind insbesondere vollständig außerhalb des durch die Wände des Transportcontainers begrenzten Transportvolumens angeordnet. Vorzugsweise ist das Abzugsband direkt oder indirekt mit einem Blockieransachlag verbunden, durch den eine Bewegung in das Innere des Transportcontainers gesperrt ist. Eine durch die Füllöffnung definierte Ebene fällt insbesondere mit einer durch die Entladeöffnung definierten Ebene zusammen. Die Entladeöffnung kann ein Teil der Füllöffnung sein. Eine Bewegung der beweglichen Bauteile in das Innere des Transportcontainers hinein ist vermieden, so dass kein Anteil des Transportvolumens für die Veränderung der Größe der Entladeöffnung vorgehalten werden muss. Ferner werden die von dem Transportcontainer aufgenommenen Stückgüter, insbesondere Post-Pakete, nicht gequetscht, so dass auch bei einem vollständig gefüllten Transportcontainer keine Beschädigung der Stückgüter durch die Bewegungsmechanik zur Ausbildung und Veränderung der Entladeöffnung erfolgen kann. Hierbei wird die Erkenntnis ausgenutzt, dass bei einem Kippen des Transportcontainers die Stückgüter sich entlang der noch geschlossenen Entladeöffnung auftürmen können und bei einem allmählichen Öffnen der Entladeöffnung in einem im Wesentlichen vereinzelten Zustand über die Entladeöffnung aus dem Transportcontainer mit minimaler Fallhöhe auf das Abzugsband ausgekippt werden können. Es hat sich herausgestellt, dass es dadurch überraschenderweise überhaupt nicht erforderlich ist, die Stückgüter im Inneren des Transportcontainers aufzunehmen und/oder das im Inneren des Transportcontainers zur Aufnahme der Stückgüter vorgesehene Aufnahmevolumen an das Volumen der Stückgüter anzupassen. Insbesondere ist es nicht erforderlich, eine Begrenzungswand in das Innere des Transportcontainers hineinzubewegen, um das Entladen der Stückgüter zu beherrschen.

Vorzugsweise ist der Transportcontainer während des Kippens mit einem Transportfahrzeug, insbesondere LKW, verbunden. Der Transportcontainer muss nicht erst von dem Transportfahrzeug gelöst, zwischengelagert, nachfolgend einzeln ausgekippt, nachfolgend erneut zwischengelagert und im entleerten Zustand mit einem Transportcontainer für einen Weitertransport verbunden werden. Statt dessen ist es möglich, den Transportcontainer gemeinsam mit dem Transportfahrzeug zu kippen, so dass die Entladezeit deutlich reduziert werden kann. Zusätzlich ist es möglich, den Transportcontainer um einen Schwenkpunkt zu verschwenken, der nicht durch eine untere Kante des Transportcontainers sondern durch die Auflage des Transportfahrzeugs auf einem Untergrund gebildet wird. Dies ermöglicht es, den Transportcontainer mit einem größeren Abstand zum Schwenkpunkt und somit mit einem größeren Hebelarm zu verschwenken. Dies erleichtert es, die Kipplage des Transportcontainers genauer und im Vergleich zu Schüttgut deutlich vorsichtiger einzustellen, so dass eine Beschädigung der Stückgüter, insbesondere Post-Pakete, vermieden ist. Mit dieser Ausprägung werden insbesondere auch höhere Anforderungen an die Positionierung des Transportfahrzeuges mit geladenem Transportcontainer vermieden. Das Transportfahrzeug kann mit üblichen Lenkbewegungen ausreichend genau positioniert werden.

Insbesondere werden die Stückgüter über eine Längsseite des Transportcontainers seitlich ausgekippt. Zur Erreichung eines geeigneten Kippwinkels zum Auskippen der Stückgüter ist im Vergleich zu einem frontalen Kippen über eine Schmalseite des Transportcontainers nur ein geringer Höhenunterschied auf der von dem Schwenkpunkt abgewandten Seite erforderlich. Eine hierfür vorgesehene Kippeinrichtung kann dadurch kleiner und kompakter gebaut sein. Insbesondere sind die auf die Kippeinrichtung wirkenden Hebelkräfte leichter aufnehmbar und können besser abgetragen werden, ohne dass die beweglichen Teile der Kippeinrichtung unnötig großen Biegemomenten ausgesetzt werden. Ferner kann vermieden werden, dass unbeabsichtigt eine Person unter den gekippten Transportcontainer gerät und beim Zurückschwenken des Transportcontainer verletzt werden könnte. Dies reduziert die Anforderungen an einen ausreichenden Arbeitsschutz beim Verschwenken des Transportcontainers.

Besonders bevorzugt verharrt der Transportcontainer während der Relativbewegung des Transportcontainers zu dem Abzugsband unbeweglich. Während des Entladens der Stückgüter kann der Transportcontainer in seiner gekippten Lage verbleiben, während das Abzugsband an der Füllöffnung entlang bewegt wird. Dadurch wird lediglich das leichtere Abzugsband beispielsweise hydraulisch bewegt und nicht der schwerere Transportcontainer. Insbesondere ist es nicht erforderlich, für das Entladen des Transportcontainers den Transportcontainer of eine andere geodätische Höhe zu bewegen. Da der Transportcontainer lediglich gekippt werden muss und eine Höhenvariation nicht erforderlich ist, kann der Transportcontainer entsprechend schnell in eine Ausladeposition gebracht werden und entsprechend schnell von einer hierfür verwendeten Kippvorrichtung wegbewegt werden. Dies führt zu einer kurzen Standzeit des Transportcontainers für das Entladen, so dass das Entladen schneller und effizienter erfolgen kann. Insbesondere ist es möglich, eine entsprechend höhere Anzahl von Transportcontainem in einer bestimmten Zeiteinheit mit der selben Infrastruktur für das Entladen abfertigen zu können. Dies führt zu einem erhöhten Durchsatz von zu entladenen Stückgütern und einer entsprechend erhöhten Entladekapazität.

Insbesondere wird der Transportcontainer in Bezug auf eine Horizontale um ein Kippwinkel β gekippt, wobei für den Kippwinkel β insbesondere 10° ≤ β ≤ 30°, vorzugsweise 15° ≤ β ≤ 25° und besonders bevorzugt β = 20°± 2° gilt. Bei einem derartig gewählten Kippwinkel können die Stückgüter, insbesondere Pakete, ohne signifikante Beschädigungsgefahr über das Abzugsband ausgekippt werden. Ein Stürzen und/oder Purzeln von Paketen wird vermieden. Insbesondere wird bei einem derartigen Kippwinkel selbst bei einer im Wesentlichen waagerecht abstehenden Klappe zum Öffnen und/oder Verschließen der Füllöffnung ein unbeabsichtigtes Umkippen des Transportcontainer vermieden.

Das Abzugsband kann insbesondere durch mehrere parallel angeordnete einzeln angetriebene Bänder ausgeführt werden, wobei die Schnittstelle zwischen den Bändern beispielsweise durch schräg gestellte gelagerte Rollen vorzugsweise einen Winkel (ω einschließt für den insbesondere 10° ≤ ω ≤ 70°, vorzugsweise 15° ≤ ω ≤ 60° und besonders bevorzugt 30° ≤ ω ≤ 45° gilt. Eine insbesondere regelbare Geschwindigkeit der im Wesentlichen parallel angeordneten Abzugsbänder unterstützt ein schonendes Entladen der Stückgüter, vorzugsweise Post-Pakete, indem ein Stau aufgelöst oder gefördert wird je nach erreichtem Winkel der Abzugsbänder gegenüber der Horizontalen. Bei einem vergleichsweise großen Winkel kann ein Stau der beförderten Pakete ein möglicherweise auftretendes Rollen oder Rutschen der Pakete auf dem Abzugsband verhindert werden. Bei einem vergleichsweise kleinen Winkel kann ein sich bildender Stau zügig aufgelöst werden, um den Staudruck auf die Stückgüter, vorzugsweise Post-Pakete, zu minimieren. Insbesondere kann ein Entstehen eines Staus verhindert werden.

Der Transportcontainer kann insbesondere mit einer Wechselbrücke verbunden sein, wobei beim Kippen des Transportcontainers insbesondere die Wechselbrücke gekippt wird. Auf der Wechselbrücke, die auch als "Flat" bezeichnet wird, kann insbesondere mehr als ein Transportcontainer angeordnet sein und insbesondere mit der Wechselbrücke befestigt sein. Dadurch ist es möglich mehrere Transportcontainer gleichzeitig durch ein kontrolliertes Auskippen vergleichbar zu Schüttgut zu entladen. Zur Vermeidung von zu großen Schüttmengen kann ein großer Transportbehälter durch die Verwendung von beweglichen Trennwänden und/oder mehreren Klappen und/oder Rolltoren auch in mehrere logische Transportcontainer unterteilt werden, welche die Vorrichtung in gleicher Weise benutzen können wie auf ein Flat montierte Transportbehälter.

Vorzugsweise erfolgt die Relativbewegung des Transportcontainers zu dem Abzugsband im Wesentlichen durchgängig, insbesondere kontinuierlich. Durch die durchgängige Bewegung, das heißt ohne zwischenzeitliche Stops, kann sichergestellt werden, dass immer wieder weitere Stückgüter aus dem Innern des Transportcontainers auf das Abzugsband nachrutschen können. Die Bewegung kann insbesondere kontinuierlich, das heißt mit im Wesentlichen konstanter Geschwindigkeit, erfolgen, wobei die gewählte Geschwindigkeit vorzugsweise an die Breite des Transportcontainers angepasst ist. In Abhängigkeit von der Breite des Transportcontainers kann sich auf einem bestimmten Höhenniveau eine unterschiedliche Anzahl von Stückgütern, insbesondere Paketen befinden, die über das Abzugsband entladen werden sollen. Besonders bevorzugt wird die Relativbewegung des Transportcontainers zu dem Abzugsband durch einen hydraulischen Antrieb realisiert, so dass es möglich ist, die Geschwindigkeit in einem größeren Geschwindigkeitsbereich stufenlos einstellen oder variieren zu können. Insbesondere, wenn der Transportcontainer nur teilweise gefüllt ist, wird das Abzugsband relativ zum Transportcontainer zu Beginn des Entladevorgangs besonders schnell bewegt, bis das Abzugsband auf das erste zu entladende Stückgut trifft. Von diesem Zeitpunkt an kann eine deutlich geringere Geschwindigkeit gewählt werden, um ein sicheres Entladen von Paketen zu gewährleisten. Bei unvorhergesehenen Schwierigkeiten kann eine Bedienperson manuell eingreifen und die Geschwindigkeit individuell verändern oder die Relativbewegung sogar in umgekehrter Richtung durchführen.

Insbesondere wird das Abzugsband mit dem Transportcontainer befestigt, bevor der Transportcontainer gekippt wird, wobei insbesondere das Abzugsband gemeinsam in den Transportcontainer gekippt wird. Dies ermöglicht zunächst den Transportcontainer im aufrechten Zustand zu öffnen und die Füllöffnung insbesondere vollständig freizulegen. Anschließend kann das Abzugsband im Bereich der Füllöffnung mit dem Transportcontainer befestigt werden, ohne dass bereits ein Stückgut aus dem Transportcontainer herausdringt. Erforderlichenfalls kann der Transportcontainer zunächst etwas von der Füllöffnung weggekippt werden, um ein unbeabsichtigtes Herausfallen eines Stückgutes sicher zu vermeiden. Erforderlichenfalls kann vor dem Kippen des Transportcontainers der Bereich der Füllöffnung unterhalb des Abzugsbandes verschlossen werden. Das Abzugsband ist insbesondere als eine eigene Baueinheit ausgeführt, die unabhängig von weiteren Baueinheiten zum Entladen des Transportcontainers, wie beispielsweise ein Transportband, mit dessen Hilfe, die über das Abzugsband entladenen Stückegüter zu einer Sortiereinrichtung befördert werden können, verbaut werden kann.

In einer bevorzugten Ausführungsform wird die Füllöffnung durch eine Prallwand teilweise verschlossen, wobei insbesondere die Prallwand längenveränderlich ausgeführt ist und/oder zur Oberkante der Füllöffnung relativ beweglich ist. Die Prallwand verschließt insbesondere den Bereich der Füllöffnung unterhalb des Abzugsbands. Hierzu kann die Prallwand insbesondere mit dem Abzugsband verbunden sein, so dass die Höhe der Prallwand automatisch an die Position des Abzugsbands relativ zum Transportcontainer angepasst wird. Die Prallwand kann beispielsweise teleskopierbar ausgeführt sein. Ferner ist es möglich, dass die Prallwand, vergleichbar zu einer Jalousie aus mehreren Teilelementen besteht, die aufgerollt und/oder beispielsweise ziehharmonikaartig zusammengefaltet werden können.

Insbesondere ist ein Winkel α zwischen der Prallwand und dem Abzugsband variabel, wobei insbesondere ein minimaler Winkel αₘᵢₙ von insbesondere 10° ≤ α_{min ≤} 60°, vorzugsweise 20° ≤ αₘᵢₙ ≤ 50° und besonders bevorzugt 30° ≤ αₘᵢₙ ≤ 45° nicht unterschritten wird. Der Winkel αₘᵢₙ ist insbesondere derart gewählt, dass unter Berücksichtigung eines Kippwinkels β des Transportcontainers zu einer Horizontalen, sich zwischen einer Horizontalen und dem Abzugsband ein Transportwinkel α' von insbesondere 0° ≤ α' ≤ 40°, vorzugsweise 10° ≤ α' ≤ 35°, weiter bevorzugt 15° ≤ α' ≤ 30° und besonders bevorzugt 20° ≤ α' ≤ 25° ergibt. Das Abzugsband kann insbesondere mit der Prallwand und/oder mit dem Transportcontainer schwenkbar verbunden sein. Dadurch ist es möglich, dass sich die Ausrichtung des Abzugsbandes beim Entladen des Transportcontainers automatisch in Bezug auf einen stationär angeordnetes Transportband anpassen kann. Gleichzeitig kann gewährleistet werden, dass ein minimaler Winkel αₘᵢₙ bzw. α' verbleibt, damit das Abzugsband nicht zu steil ausgerichtet ist. Dadurch wird vermieden, dass über das Abzugsband entladene Stückgüter über das Abzugsband herunterrutschen oder herunter purzeln.

Besonders bevorzugt wird das Abzugsband mit einer Transportgeschwindigkeit betrieben, die höher ist als die Geschwindigkeit der ausgekippten Stückgüter und/oder niedriger als die Transportgeschwindigkeit eines Transportbandes, auf das das Abzugsband die Stückgüter befördert. Durch die so gewählte Transportgeschwindigkeit des Abzugsbands kann bereits beim Entladen der Stückgüter eine Vereinzelung der Stückgüter erfolgen. Insbesondere ist es möglich, dass ein von dem Abzugsband erfasstes Stückgut schneller wegbefördert wird, als ein nachfolgendes Stückgut auf das Abzugsband gelangen kann. Die dadurch zwischen den einzelnen Stückgütern entstehenden Abstände erleichtert es, die Oberflächen der Stückgüter durch optische Verfahren zu scannen und durch so erfasste Sortierinformationen einer Sortierung zuzuführen. Beispielsweise können Pakete über als Barcode codierte Adressdaten nach Zustellgebieten sortiert werden.

In einer bevorzugten Ausführungsform wird ein Transportband vorgesehen, auf das das Abzugsband die Stückgüter befördert, wobei das Transportband relativ zum Transportcontainer, vorzugsweise vertikal bewegt wird, und insbesondere das Abzugsband mit einem Bewegungsanteil in horizontaler Richtung bewegt wird. Eine vertikale Bewegung des Transportbandes und/oder des Transportcontainers lässt sich mit Hilfe einer hydraulischen Hubvorrichtung besonders einfach realisieren. Gleichzeitig kann sich das Abzugsband bezogen auf das Transportband im Wesentlichen horizontal bewegen, um immer besonders nah an der Füllöffnung des Transportcontainers anzuliegen. Hierzu kann das Abzugsband beispielsweise über Rollen horizontal zum Transportband geführt sein. Durch diese Bewegungskinematik des Transportbands wird erreicht, dass die Steigung des Abzugsbands beim Entladen des Transportcontainers über die gesamte Höhe des Transportcontainers im Wesentlichen konstant bleibt. Ein Winkel α zwischen dem Abzugsband und einer Prallwand ist in diesem Fall konstant.

Die Erfindung betrifft ferner eine Entladevorrichtung zum Entladen einer Vielzahl von Stückgütern, wie insbesondere Paketen, aus einem Transportcontainer, der eine verschließbare Füllöffnung aufweist. Die erfindungsgemäße Entladevorrichtung eignet sich insbesondere zur Durchführung des vorstehend beschriebenen Verfahrens und kann, wie anhand des Verfahrens erläutert, weiter aus- und weitergebildet sein. Die Entladevorrichtung weist ein Abzugsband zur Positionierung an der Füllöffnung unter Freigabe einer an einer Oberkante der Füllöffnung beginnenden Entladeöffnung auf. Ferner ist eine Kippeinrichtung zum Kippen des Transportcontainers bis mindestens ein Stückgut über die Entladeöffnung auf das Abzugsband auskippbar ist, vorgesehen. Ferner weist die Entladevorrichtung eine Bewegungseinrichtung zur Bewegung des unteren Randes der Entladeöffnung auf eine Unterkante der Füllöffnung zu durch eine Relativbewegung eines Transportcontainers zu dem Abzugsband auf. Das Abzugsband weist eine Haltevorrichtung zur Befestigung mit dem Transportcontainer auf, wobei das Abzugsband zwischen der Oberkante der Füllöffnung und der Unterkante der Füllöffnung zumindest in einem Teilbereich beweglich ist.

Durch das Abzugsband, das an der Füllöffnung von oben nach unten entlang fahren kann, ist es möglich, die einzelnen Stückgüter, insbesondere Pakete, zu entladen, ohne eine Beschädigung der Stückgüter zu riskieren, so dass das Entladen einer Vielzahl von Stückgütern aus dem Transportcontainer schneller und einfacher erfolgen kann.

Durch die Haltevorrichtung kann ein Loslösen des Abzugsbandes von dem Transportcontainer vermieden werden. Die Gefahr, dass zwischen dem Abzugsband und dem Transportcontainer ein Spalt entsteht, durch den hindurch Stückgüter herausfallen können, ist dadurch reduziert oder sogar vermieden. Die Haltevorrichtung kann insbesondere von außen eine Klemmkraft auf den Transportcontainer aufbringen, so dass ein Loslösen des Abzugsbandes von dem Transportcontainer vermieden ist. Insbesondere weist die Haltevorrichtung Rollen auf, die eine Bewegung des Abzugsbandes von oben nach unten ermöglichen.

Vorzugsweise ist eine Prallwand zum teilweisen Verschließen der Füllöffnung vorgesehen, wobei insbesondere die Prallwand längenveränderlich ausgeführt ist und/oder zur Oberkante der Füllöffnung relativ beweglich ist. Durch die Prallwand kann der unterhalb des Abzugsbandes angeordnete Bereich der Füllöffnung verschlossen werden, so dass bei einem geöffneten und gekippten Transportcontainer Stückgüter nicht durch einen Bereich der Füllöffnung unterhalb des Abzugsbandes aus dem Transportcontainer herausfallen können. Die Prallwand kann insbesondere gelenkig mit dem Abzugsband verbunden sein. Ferner kann die Prallwand insbesondere an der Unterkante der Füllöffnung mit dem Transportcontainer befestigt sein.

Vorzugsweise ist die Prallwand unter einem Winkel α mit dem Abzugsband verbunden, wobei der Winkel α insbesondere variabel ist, wobei insbesondere ein minimaler Winkel von α von insbesondere 10° ≤ αₘᵢₙ ≤ 60°, vorzugsweise 20° ≤ αₘᵢₙ ≤ 50° und besonders bevorzugt 30° ≤ αₘᵢₙ ≤ 45° nicht unterscheidbar ist. Insbesondere ist der Winkel αₘᵢₙ derart gewählt ist, dass unter Berücksichtigung eines Kippwinkels β des Transportcontainers zu einer Horizontalen, sich zwischen einer Horizontalen und dem Abzugsband ein Transportwinkel α' von insbesondere 0° ≤ α' ≤ 40°, vorzugsweise 10° ≤ α' ≤ 35°, weiter bevorzugt 15° ≤ α' ≤ 30° und besonders bevorzugt 20° ≤ α' ≤ 25° ergibt. Eine zu steile Positionierung des Abzugsbands wird dadurch vermieden, so dass die Stückgüter nicht an dem Abzugsband herunterrutschen oder herunter purzeln können.

Bei einer bevorzugten Ausführungsform ist ein Transportband, auf das das Abzugsband die Stückgüte befördert, vorgesehen, wobei insbesondere das Abzugsband mit einer Transportgeschwindigkeit betreibbar ist, die höher als die Geschwindigkeit der ausgekippten Stückgüter und/oder niedriger als die Transportgeschwindigkeit des Transportbandes ist. Durch eine so gewählte Transportgeschwindigkeit des Abzugsbandes kann bereits beim Entladen eine Vereinzelung der Stückgüter erfolgen, die eine nachfolgende Sortierung vereinfacht.

Besonders bevorzugt ist das Transportband mit Hilfe einer Hubeinrichtung relativ zum Transportcontainer vorzugsweise vertikal bewegbar, wobei insbesondere das Abzugsband mit einem Bewegungsanteil in horizontaler Richtung bewegbar ist. Durch die im Wesentlichen vertikale Bewegbarkeit des Transportbands relativ zum Transportcontainer und im Wesentlichen horizontale Bewegbarkeit des Abzugsbands ist es möglich, die Schrägstellung des Abzugsbands während des gesamten Entladevorgangs des Transportcontainers im Wesentlichen konstant zu halten.

Die Erfindung betrifft ferner eine Verwendung der vorstehend beschriebenen Entladevorrichtung zum Zwecke des Auskippens von Post-Paketen.

Die Erfindung betrifft ferner eine Entladeanordnung zum Entladen einer Vielzahl von Stückgütern, insbesondere Paketen, mit einem Transportcontainer, der eine verschließbare Füllöffnung aufweist, und einer an dem geöffneten Transportcontainer angelegten Entladevorrichtung, die insbesondere wie vorstehend beschrieben aus- und weitergebildet sein kann. Durch das an der Füllöffnung entlang verfahrbare Abzugsband der Entladevorrichtung ist es möglich, eine Vielzahl von Stückgütern insbesondere Pakete schnell und einfach aus dem Transportcontainer zu entladen ohne eine Beschädigung der Stückgüter beim Entladen zu riskieren.

Die Erfindung betrifft ferner eine Verwendung der vorstehend beschriebenen Entladeanordnung zum Zwecke des Auskippens von Post-Paketen.

Nachfolgend wird die Erfindung unter Bezugnahme auf die anliegenden Zeichnungen anhand bevorzugter Ausführungsbeispiele näher erläutert. Es zeigen:
- Fig. 1: eine schematische Seitenansicht einer ersten Ausführungsform einer Entlade- vorrichtung in einer ersten Position,
- Fig. 2: eine schematische Seitenansicht der Entladevorrichtung aus Fig. 1 in einer zweiten Position,
- Fig. 3: eine schematische Seitenansicht der Entladevorrichtung aus Fig. 1 in einer drit- ten Position,
- Fig. 4: eine schematische Seitenansicht einer zweiten Ausführungsform einer Entla- devorrichtung in einer ersten Position und
- Fig. 5: eine schematische Seitenansicht der Entladevorrichtung aus Fig. 4 in einer zweiten Position.

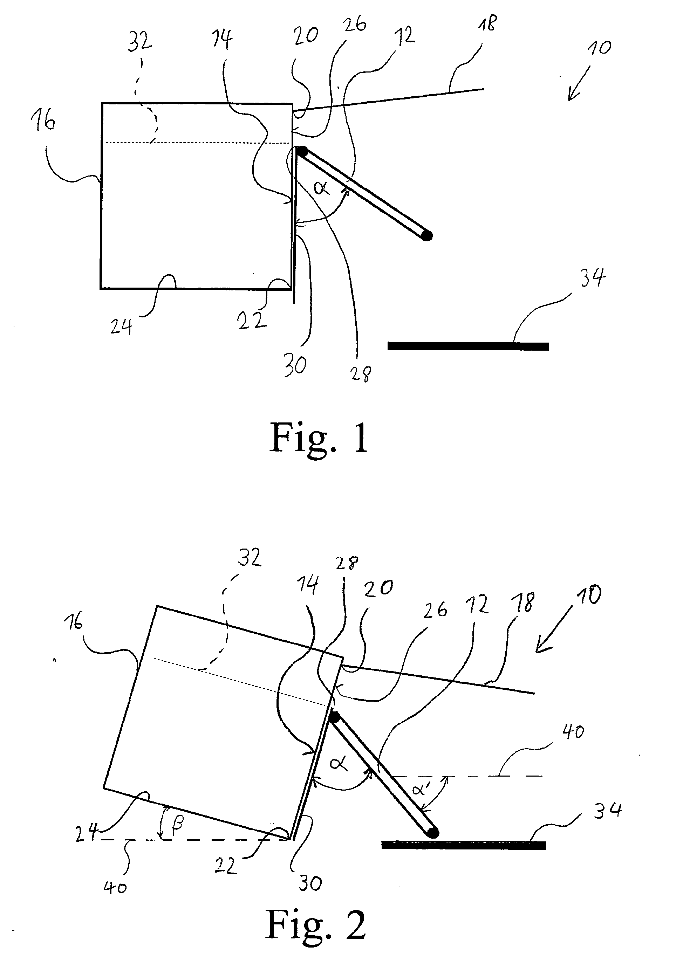

Bei der in Fig. 1 dargestellten Entladevorrichtung 10 ist ein Abzugsband 12 an einer Füllöffnung 14 eines Transportcontainers 16 positioniert. Die Füllöffnung 14 kann durch eine mit dem Transportcontainer 16 schwenkbar verbundenen Klappe 18 geöffnet und verschlossen werden. Durch die Klappe 18 wird eine Oberkante 20 in der Füllöffnung 14 definiert. Die untere Grenze der Füllöffnung 14 wird durch eine Unterkante 22 definiert, die im Wesentlichen auf Höhe eines Bodens 24 des Transportcontainers 16 vorgesehen ist. Zwischen der Oberkante 20 und dem Abzugsband 12 wird eine Entladeöffnung 26 definiert. Im dargestellten Ausführungsbeispiel wird der obere Rand der Entladeöffnung 26 durch die Oberkante 20 ausgebildet. Ein unterer Rand 28 der Entladeöffnung 26 wird durch obere Ende des Abzugsbands 12 definiert. Im dargestellten Ausführungsbeispiel ist mit dem Abzugsband 12 eine Prallwand 30 verbunden, die einen Bereich der Füllöffnung 14 unterhalb des Abzugsbands 12 verschließt. Der Transportcontainer 16 ist über das Füllniveau 32 hinaus mit Stückgütern, insbesondere Paketen, gefüllt. Mit Hilfe des Abzugsbands 12 sollen die Stückgüter zu einem Transportband 34 gefördert werden. Mit Hilfe des Transportbandes 34 könnten die zu entladenen Stückgüter zu weiteren Stationen, beispielsweise Sortierstationen weiter befördert werden.

Wie in Fig. 2 zu sehen, kann der Transportcontainer 16 gemeinsam mit dem Abzugsband 12 und der Prallwand 30 gekippt werden, bis das Abzugsband 12 auf das Transportband 34 stößt. Ungefähr in dieser Position reicht der Kippwinkel des Transportcontainers 16 aus, dass einzelne Stückgüter aus dem Inneren des Transportcontainers 16 durch die Entladeöffnung 26 auf das Transportband 12 gelangen. Zwischen dem Transportband 12 und der Prallwand 30 wird ein Winkel α aufgespannt, der derart gewählt ist, dass ein entladenes Stückgut von dem Transportband 12 durch Reibungskräfte festgehalten werden kann, ohne dass das Stückgut über die Oberfläche des Transportbands 12 herunterrutscht. Unter Berücksichtigung eines Kippwinkels β zwischen einer Horizontalen 40 und dem Boden 24 des Transportcontainers 16 ergibt sich im gekippten Zustand des Transportcontainers 16 zwischen der Horizontalen 40 und dem Abzugsband 12 ein Transportwinkel α', der derart gewählt ist, dass ein Rutschen und Purzeln der Stückgüter über das Abzugsband vermieden ist.

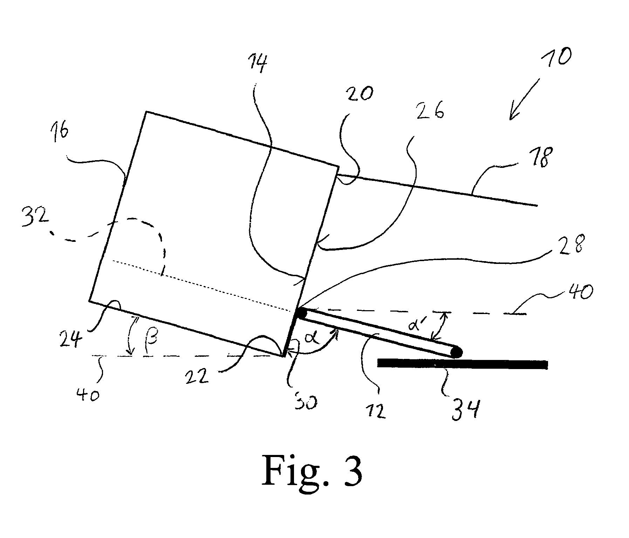

Wie in Fig. 3 dargestellt, kann das Abzugsband 12 an der Füllöffnung 14 entlang herunter bewegt werden, so dass allmählich die Stückgüter auf dem Transportcontainer 12 von oben nach unten allmählich entladen werden. Das Füllniveau 32 des Transportcontainers 16 sinkt hierbei allmählich ab. Im dargestellten Ausführungsbeispiel vergrößert sich hierbei der Winkel α entsprechend. Die Prallwand 30 kann hierbei längenveränderlich ausgestellt sein und/oder über teleskopierbare Elemente auf eine geringere Höhe zusammengestaucht werden.

Die Klappe 18 kann festgehalten und/oder mit dem Transportcontainer 16 arretiert werden, um ein unbeabsichtigtes Zuschlagen der Klappe 18 zu vermeiden.

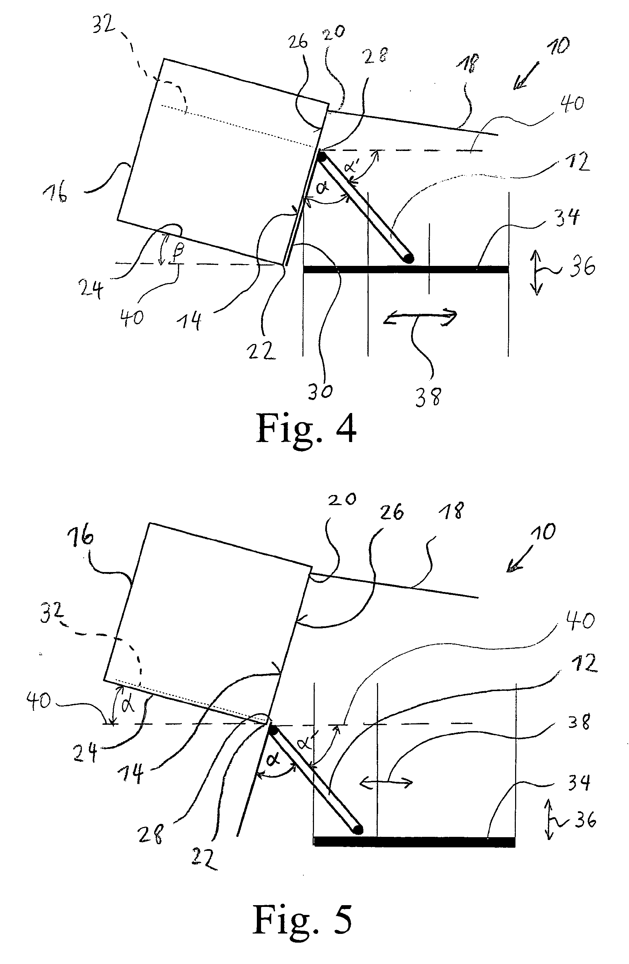

Bei der in Fig. 4 dargestellten Entladevorrichtung 10 ist im Vergleich zu der in Fig. 1 bis 3 dargestellten Entladevorrichtung 10 das Transportband 34 mit Hilfe einer hydraulischen Hubvorrichtung in einer vertikalen Richtung 36 höhenverstellbar. Das Abzugsband 12 wird im Vergleich zum Transportband 34, beispielsweise mit Hilfe eines Gleitlagers am Abzugsband 34 geführt, in einer horizontalen Richtung 38 bewegt. Der Winkel α zwischen dem Transportband 12 und der Prallwand 30 kann dadurch sowohl zu Beginn des Entladevorgangs (Fig. 4) als auch zum Ende des Entladevorgangs (Fig. 5) konstant bleiben.

## Patentansprüche

1. Verfahren zum Entladen einer Vielzahl von Stückgütern, insbesondere Paketen, aus einem Transportcontainer (16), der eine verschließbare Füllöffnung (14) aufweist, bei dem
die Füllöffnung (14) des Transportcontainers (16) teilweise zur Ausbildung einer Entladeöffnung (26) geöffnet wird, wobei die Entladeöffnung (26) an einer Oberkante (20) der Füllöffnung (14) beginnt,
ein Abzugsband (12) an einem unteren Rand (28) der Entladeöffnung (26) positioniert und mit dem Transportcontainer (16) verbunden wird, wobei das Abzugsband (12) zwischen der Oberkante (20) der Füllöffnung (14) und einer Unterkante (22) der Füllöffnung (14) zumindest in einem Teilbereich beweglich ist,
der Transportcontainer (16) derart gekippt wird, dass mindestens ein Stückgut über die Entladeöffnung (26) auf das Abzugsband (12) ausgekippt wird, und
der untere Rand (28) der Entladeöffnung (26) durch eine Relativbewegung des Transportcontainers (16) zu dem Abzugsband (12) auf die Unterkante (22) der Füllöffnung (14) zu bewegt wird.

2. Verfahren nach Anspruch 1 **dadurch gekennzeichnet, dass** der Transportcontainer (16) während der Relativbewegung des Transportcontainers (16) zu dem Abzugsband (12) unbeweglich verharrt.

3. Verfahren nach Anspruch 1 oder 2 **dadurch gekennzeichnet, dass** die Relativbewegung des Transportcontainers (16) zu dem Abzugsband (12) im Wesentlichen durchgängig, insbesondere kontinuierlich erfolgt.

4. Verfahren einem der Ansprüche 1 bis 3 **dadurch gekennzeichnet, dass** das Abzugsband (12) mit dem Transportcontainer (16) befestigt wird bevor der Transportcontainer (16) gekippt wird, wobei insbesondere das Abzugsband (12) gemeinsam mit dem Transportcontainers (16) gekippt wird.

5. Verfahren nach einem der Ansprüche 1 bis 4 **dadurch gekennzeichnet, dass** die Füllöffnung (14) durch eine Prallwand (30) teilweise verschlossen wird, wobei insbesondere die Prallwand (30) längenveränderlich ausgeführt ist und/oder zur Oberkante (20) der Füllöffnung (14) relativ beweglich ist.

6. Verfahren nach Anspruch 5 **dadurch gekennzeichnet, dass** ein Winkel α zwischen der Prallwand (30) und dem Abzugsband (12) variabel ist und insbesondere ein minimaler Winkel αₘᵢₙ von insbesondere 10° ≤ αₘᵢₙ ≤ 60°, vorzugsweise 20° ≤ αₘᵢₙ ≤ 50° und besonders bevorzugt 30° ≤ αₘᵢₙ ≤ 45° nicht unterschritten wird, wobei insbesondere der Winkel αₘᵢₙ derart gewählt ist, dass unter Berücksichtigung eines Kippwinkels β des Transportcontainers zu einer Horizontalen, sich zwischen einer Horizontalen und dem Abzugsband ein Transportwinkel α' von insbesondere 0° ≤ α' ≤ 40°, vorzugsweise 10° ≤ α' ≤ 35°, weiter bevorzugt 15° ≤ α' ≤ 30° und besonders bevorzugt 20° ≤ α' ≤ 25° ergibt.

7. Verfahren nach einem der Ansprüche 1 bis 6 **dadurch gekennzeichnet, dass** ein Transportband (34) vorgesehen wird, auf das das Abzugsband (12) die Stückgüter befördert, wobei das Transportband (34) relativ zum Transportcontainer (16) vorzugsweise vertikal bewegt wird und insbesondere das Abzugsband (34) mit einem Bewegungsanteil in horizontaler Richtung bewegt wird.

8. Entladevorrichtung zum Entladen einer Vielzahl von Stückgütern, insbesondere Paketen, aus einem Transportcontainer (16), der eine verschließbare Füllöffnung (14) aufweist, insbesondere zur Durchführung des Verfahrens nach einem der Ansprüche 1 bis 7, mit
einem Abzugsband (12) zur Positionierung an der Füllöffnung (14) unter Freigabe einer an einer Oberkante (20) der Füllöffnung (14) beginnenden Entladeöffnung (26),
einer Kippeinrichtung zum Kippen des Transportcontainers (16) bis mindestens ein Stückgut über die Entladeöffnung (26) auf das Abzugsband (12) auskippbar ist, und
einer Bewegungseinrichtung zur Bewegung des unteren Rands (28) der Entladeöffnung (26) auf eine Unterkante (22) der Füllöffnung (14) zu durch eine Relativbewegung des Transportcontainers (16) zu dem Abzugsband (12),
wobei das Abzugsband (12) eine Haltevorrichtung zur Befestigung mit dem Transportcontainer (16) aufweist, wobei das Abzugsband (12) zwischen der Oberkante (20) der Füllöffnung (14) und der Unterkante (22) der Füllöffnung (14) zumindest in einem Teilbereich beweglich ist.

9. Entladevorrichtung nach Anspruch 8 **dadurch gekennzeichnet, dass** eine Prallwand (30) zum teilweise Verschließen der Füllöffnung (14) vorgesehen ist, wobei insbesondere die Prallwand (30) längenveränderlich ausgeführt ist und/oder zur Oberkante (20) der Füllöffnung (14) relativ beweglich ist.

10. Entladevorrichtung nach Anspruch 9 **dadurch gekennzeichnet, dass** die Prallwand (30) unter einem Winkel α mit dem Abzugsband (12) verbunden ist und der Winkel α insbesondere variabel ist, wobei insbesondere ein minimaler Winkel αₘᵢₙ von insbesondere 10° ≤ αₘᵢₙ ≤ 60°, vorzugsweise 20° ≤ αₘᵢₙ ≤ 50° und besonders bevorzugt 30° ≤ α_{min ≤} 45° nicht unterschreitbar ist, wobei insbesondere der Winkel αₘᵢₙ derart gewählt ist, dass unter Berücksichtigung eines Kippwinkels β des Transportcontainers zu einer Horizontalen, sich zwischen einer Horizontalen und dem Abzugsband ein Transportwinkel α' von insbesondere 0° ≤ α' ≤ 40°, vorzugsweise 10° ≤ α' ≤ 35°, weiter bevorzugt 15° ≤ α' ≤ 30° und besonders bevorzugt 20° ≤ α' ≤ 25° ergibt.

11. Entladevorrichtung nach einem der Ansprüche 8 bis 10 **dadurch gekennzeichnet, dass** ein Transportband (34), auf das das Abzugsband (12) die Stückgüter befördert, vorgesehen ist, wobei insbesondere das Abzugsband (34) mit einer Transportgeschwindigkeit betreibbar ist, die höher als die Geschwindigkeit der ausgekippten Stückgüter und/oder niedriger als die Transportgeschwindigkeit des Transportbandes (34) ist.

12. Entladevorrichtung nach Anspruch 11 **dadurch gekennzeichnet, dass** das Transportband (34) mit Hilfe einer Hubeinrichtung relativ zum Transportcontainer (16) vorzugsweise vertikal bewegbar ist und insbesondere das Abzugsband (12) mit einem Bewegungsanteil in horizontaler Richtung bewegbar ist.

13. Entladeanordnung zum Entladen einer Vielzahl von Stückgütern, insbesondere Paketen, mit einem Transportcontainer (16), der eine verschließbare Füllöffnung (14) aufweist, und einer an dem geöffneten Transportcontainer (16) angelegten Entladevorrichtung (10) nach einem der Ansprüche 8 bis 12.

## Claims

1. Method for unloading a large number of articles, in particular packages, from a transport container (16) which has a closable filling opening (14), wherein
the filling opening (14) of the transport container (16) is partially opened to form an unloading opening (26), wherein the unloading opening (26) starts at a top edge (20) of the filling opening (14),
a removal belt (12) is positioned at a bottom rim (28) of the unloading opening (26) and is connected to the transport container (16), wherein the removal belt (12) is movable, at least in a sub-region, between the top edge (20) of the filling opening (14) and a bottom edge (22) of the filling opening (14),
the transport container (16) is tipped such that at least one article is tipped out onto the removal belt (12) via the unloading opening (26), and
the bottom rim (28) of the unloading opening (26) is moved towards the bottom edge (22) of the filling opening (14) by way of a relative movement of the transport container (16) with respect to the removal belt (12).

2. Method according to Claim 1, **characterized in that** the transport container (16) remains immovable during the relative movement of the transport container (16) with respect to the removal belt (12).

3. Method according to Claim 1 or 2, **characterized in that** the relative movement of the transport container (16) with respect to the removal belt (12) takes place in a substantially non-stop manner, in particular continuously.

4. Method according to one of Claims 1 to 3, **characterized in that** the removal belt (12) is secured to the transport container (16) before the transport container (16) is tipped, wherein in particular the removal belt (12) is tipped jointly with the transport container (16).

5. Method according to one of Claims 1 to 4, **characterized in that** the filling opening (14) is partially closed by an impact wall (30), wherein in particular the impact wall (30) is configured to have a variable length and/or is movable in relation to the top edge (20) of the filling opening (14).

6. Method according to Claim 5, **characterized in that** an angle α between the impact wall (30) and the removal belt (12) is variable, and said angle α in particular does not fall below a minimum angle αₘᵢₙ of in particular 10° ≤ αₘᵢₙ ≤ 60°, preferably 20° ≤ αₘᵢₙ ≤ 50°, and particularly preferably 30° ≤ αₘᵢₙ ≤ 45°, wherein in particular the angle αₘᵢₙ is selected such that, with a tipping angle β of the transport container with respect to a horizontal being taken into account, a transporting angle α' of in particular 0° ≤ α' ≤ 40°, preferably 10° ≤ α' ≤ 35°, more preferably 15° ≤ α' ≤ 30° and particularly preferably 20° ≤ α' ≤ 25° arises between a horizontal and the removal belt.

7. Method according to one of Claims 1 to 6, **characterized by** the provision of a transporting belt (34), onto which the removal belt (12) conveys the articles, wherein the transporting belt (34) is moved in relation to the transport container (16), preferably vertically, and in particular the removal belt (34) is moved with a movement component in the horizontal direction.

8. Unloading apparatus for unloading a large number of articles, in particular packages, from a transport container (16) which has a closable filling opening (14), in particular for carrying out the method according to one of Claims 1 to 7, having
a removal belt (12) for positioning at the filling opening (14), with an unloading opening (26) that starts at a top edge (20) of the filling opening (14) being released,
a tipping device for tipping the transport container (16) until at least one article can be tipped out onto the removal belt (12) via the unloading opening (26), and
a moving device for moving the bottom rim (28) of the unloading opening (26) towards a bottom edge (22) of the filling opening (14) by way of a relative movement of the transport container (16) with respect to the removal belt (12),
wherein the removal belt (12) has a holding apparatus for securing to the transport container (16), wherein the removal belt (12) is movable, at least in a sub-region, between the top edge (20) of the filling opening (14) and the bottom edge (22) of the filling opening (14).

9. Unloading apparatus according to Claim 8, **characterized in that** an impact wall (30) for partially closing the filling opening (14) is provided, wherein in particular the impact wall (30) is configured to have a variable length and/or is movable in relation to the top edge (20) of the filling opening (14).

10. Unloading apparatus according to Claim 9, **characterized in that** the impact wall (30) is connected to the removal belt (12) at an angle α and the angle α is in particular variable, wherein in particular said angle α cannot fall below a minimum angle αₘᵢₙ of in particular 10° ≤ αₘᵢₙ ≤ 60°, preferably 20° ≤ αₘᵢₙ ≤ 50°, and particularly preferably 30° ≤ αₘᵢₙ ≤ 45°, wherein in particular the angle αₘᵢₙ is selected such that, with a tipping angle β of the transport container with respect to a horizontal being taken into account, a transporting angle α' of in particular 0° ≤ α' ≤ 40°, preferably 10° ≤ α' ≤ 35°, more preferably 15° ≤ α' ≤ 30° and particularly preferably 20° ≤ α' ≤ 25° arises between a horizontal and the removal belt.

11. Unloading apparatus according to one of Claims 8 to 10, **characterized by** the provision of a transporting belt (34), on which the removal belt (12) conveys the articles, wherein in particular the removal belt (34) is operable at a transporting speed which is higher than the speed of the tipped-out articles and/or lower than the transporting speed of the transporting belt (34).

12. Unloading apparatus according to Claim 11, **characterized in that** the transporting belt (34) is movable in relation to the transport container (16), preferably vertically, with the aid of a lifting device, and in particular the removal belt (12) is movable with a movement component in the horizontal direction.

13. Unloading arrangement for unloading a large number of articles, in particular packages, having a transport container (16), which has a closable filling opening (14), and an unloading apparatus (10) according to one of Claims 8 to 12, which is placed against the opened transport container (16).

## Revendications

1. Procédé pour décharger une pluralité d'articles, en particulier de paquets, hors d'un conteneur de transport (16) qui présente une ouverture de remplissage refermable (14), dans lequel :
l'ouverture de remplissage (14) du conteneur de transport (16) est en partie ouverte pour réaliser une ouverture de déchargement (26), l'ouverture de déchargement (26) commençant au niveau d'une arête supérieure (20) de l'ouverture de remplissage (14),
une bande de traction (12) est positionnée au niveau d'un bord inférieur (28) de l'ouverture de déchargement (26) et est connectée au conteneur de transport (16), la bande de traction (12) pouvant être déplacée entre l'arête supérieure (20) de l'ouverture de remplissage (14) et une arête inférieure (22) de l'ouverture de remplissage (14) au moins dans une région partielle,
le conteneur de transport (16) étant basculé de telle sorte qu'au moins un article soit sorti par basculement par l'ouverture de déchargement (26) sur la bande de traction (12), et
le bord inférieur (28) de l'ouverture de déchargement (26) est déplacé par un mouvement relatif du conteneur de transport (16) par rapport à la bande de traction (12) vers l'arête inférieure (22) de l'ouverture de remplissage (14).

2. Procédé selon la revendication 1, **caractérisé en ce que** le conteneur de transport (16) demeure immobile pendant le mouvement relatif du conteneur de transport (16) par rapport à la bande de traction (12).

3. Procédé selon la revendication 1 ou 2, **caractérisé en ce que** le mouvement relatif du conteneur de transport (16) par rapport à la bande de traction (12) a lieu essentiellement de manière constante, notamment en continu.

4. Procédé selon l'une quelconque des revendications 1 à 3, **caractérisé en ce que** la bande de traction (12) est fixée au conteneur de transport (16) avant que le conteneur de transport (16) ne soit basculé, et notamment la bande de traction (12) est basculée conjointement avec le conteneur de transport (16).

5. Procédé selon l'une quelconque des revendications 1 à 4, **caractérisé en ce que** l'ouverture de remplissage (14) est fermée en partie par une paroi d'impact (30), la paroi d'impact (30) étant notamment réalisée avec une longueur variable et/ou étant relativement déplaçable par rapport à l'arête supérieure (20) de l'ouverture de remplissage (14).

6. Procédé selon la revendication 5, **caractérisé en ce qu'**un angle α entre la paroi d'impact (30) et la bande de traction (12) est variable et notamment un angle minimum αₘᵢₙ de notamment 10° ≤ αₘᵢₙ 60°, de préférence 20° ≤ αₘᵢₙ ≤ 50°, et particulièrement préférablement 30° ≤ αₘᵢₙ ≤ 45°, n'est pas dépassé, et notamment l'angle αₘᵢₙ est choisi de telle sorte qu'en tenant compte d'un angle de basculement β du conteneur de transport par rapport à l'horizontale, on obtienne entre l'horizontale et la bande de traction un angle de transport α' de notamment 0° ≤ α' ≤ 40°, de préférence 10° ≤ α' ≤ 35°, plus préférablement 15° ≤ α' ≤ 30°, et particulièrement préférablement 20° ≤ α' ≤ 25°.

7. Procédé selon l'une quelconque des revendications 1 à 6, **caractérisé en ce que** l'on prévoit une bande de transport (34) sur laquelle la bande de traction (12) transporte les articles, la bande de transport (34) étant déplacée de préférence verticalement par rapport au conteneur de transport (16) et notamment la bande de traction (12) est déplacée avec une proportion de mouvement dans la direction horizontale.

8. Dispositif de déchargement pour le déchargement d'une pluralité d'articles, en particulier de paquets hors d'un conteneur de transport (16), qui présente une ouverture de remplissage refermable (14), en particulier pour mettre en oeuvre le procédé selon l'une quelconque des revendications 1 à 7, comprenant
une bande de traction (12) pour le positionnement au niveau de l'ouverture de remplissage (14) en libérant une ouverture de déchargement (26) commençant au niveau d'une arête supérieure (20) de l'ouverture de remplissage (14),
un dispositif de basculement pour le basculement du conteneur de transport (16) jusqu'à ce qu'au moins un article puisse être sorti par basculement par l'ouverture de déchargement (26) sur la bande de traction (12), et
un dispositif de déplacement pour déplacer le bord inférieur (28) de l'ouverture de déchargement (26) vers une arête inférieure (22) de l'ouverture de remplissage (14) par un mouvement relatif du conteneur de transport (16) par rapport à la bande de traction (12),
la bande de traction (12) présentant un dispositif de retenue pour la fixation au conteneur de transport (16), la bande de traction (12) pouvant être déplacée entre l'arête supérieure (20) de l'ouverture de remplissage (14) et l'arête inférieure (22) de l'ouverture de remplissage (14) au moins dans une région partielle.

9. Dispositif de déchargement selon la revendication 8, **caractérisé en ce qu'**il est prévu une paroi d'impact (30) pour fermer partiellement l'ouverture de remplissage (14), la paroi d'impact (30) étant notamment réalisée avec une longueur variable et/ou étant relativement déplaçable par rapport à l'arête supérieure (20) de l'ouverture de remplissage (14).

10. Dispositif de déchargement selon la revendication 9, **caractérisé en ce que** la paroi d'impact (30) est connectée suivant un angle α à la bande de traction (12) et l'angle α est notamment variable, et notamment un angle minimum αₘᵢₙ de notamment 10° ≤ αₘᵢₙ 60° , de préférence 20° ≤ αₘᵢₙ ≤ 50°, et particulièrement préférablement 30° ≤ αₘᵢₙ ≤ 45°, ne peut pas être dépassé, et notamment l'angle αₘᵢₙ est choisi de telle sorte qu'en tenant compte d'un angle de basculement β du conteneur de transport par rapport à l'horizontale, on obtienne entre l'horizontale et la bande de traction un angle de transport α' de notamment 0° ≤ α' ≤ 40°, de préférence 10° ≤ α' ≤ 35°, plus préférablement 15° ≤ α' ≤ 30°, et particulièrement préférablement 20° ≤ α' ≤ 25°.

11. Dispositif de déchargement selon l'une quelconque des revendications 8 à 10, **caractérisé en ce qu'**il est prévu une bande de transport (34) sur laquelle la bande de traction (12) transporte les articles, et notamment la bande de traction (12) peut être entraînée avec une vitesse de transport qui est supérieure à la vitesse des articles basculés et/ou qui est inférieure à la vitesse de transport de la bande de transport (34).

12. Dispositif de déchargement selon la revendication 11, **caractérisé en ce que** la bande de transport (34) peut être déplacée de préférence verticalement à l'aide d'un dispositif de levage par rapport au conteneur de transport (16), et en particulier la bande de traction (12) peut être déplacée avec une proportion de mouvement dans la direction horizontale.

13. Agencement de déchargement pour le déchargement d'une pluralité d'articles, en particulier de paquets, comprenant un conteneur de transport (16) qui présente une ouverture de remplissage refermable (14), et un dispositif de déchargement (10) appliqué sur le conteneur de transport ouvert (16), selon l'une quelconque des revendications 8 à 12.
